# FASCICULE DE BREVET EUROPEEN

(11) **EP 3 069 209 B1**
(45) Date de publication et mention de la délivrance du brevet: **04.09.2019**
(21) Numéro de dépôt: 14798800.0
(22) Date de dépôt: 12.11.2014
(51) Int. Cl.: G06F 1/18, G06F 1/20, H05K 7/14, H05K 7/20

(54) **SYSTEME D'INTERCONNEXION MULTIFONCTIONNEL POUR MEUBLE ELECTRONIQUE ET MEUBLE COMPRENANT UN TEL SYSTEME**
MULTIFUNKTIONSVERBINDUNGSSYSTEM FÜR EINEN ELEKTRONISCHEN SCHRANK UND SCHRANK MIT SOLCH EINEM SYSTEM
MULTIFUNCTIONAL INTERCONNECTION SYSTEM FOR AN ELECTRONIC CABINET AND CABINET COMPRISING SUCH A SYSTEM

(30) Priorité: 15.11.2013 FR 1361183
(43) Date de publication de la demande: 21.09.2016
(73) Titulaire: AIRBUS (SAS), 31700 Blagnac (FR)
(72) Inventeur: DANTIN, Benoît, 95170 Deuil La Barre (FR)
(74) Mandataire: Gicquel, Olivier Yves Gérard
(86) Numéro de dépôt international: PCT/EP2014/074328
(87) Numéro de publication internationale: WO 2015/071287

(56) Documents cités:
- EP-A1- 2 528 421
- WO-A1-2013/152972
- US-A- 4 458 296
- US-A1- 2006 234 787
- US-A1- 2009 184 877
- US-B1- 6 205 029

## Description

### Arrière plan de l'invention

### Domaine de l'invention

La présente invention concerne un système d'interconnexion multifonctionnel pour un meuble électronique notamment un meuble électronique de type armoire électrique ou électronique d'aéronef et un meuble comprenant un tel système.

Elle s'applique notamment pour les meubles pour équipements électroniques comme par exemple les meubles regroupant des calculateurs présents dans les avions.

### Arrière plan technologique

Dans les aéronefs actuels et notamment pour des raisons de maintenance et d'accessibilité, les calculateurs sont regroupés dans des armoires électriques.

Les armoires appelées aussi racks électriques ou avioniques on trois fonctions principales. Une fonction d'interconnexion: raccorder les calculateurs regroupés dans l'armoire entre les équipements et avec l'appareil pour l'échange des données et l'alimentation électrique de ces calculateurs;
Une fonction mécanique: maintenir les calculateurs de l'appareil en position;
Une fonction de refroidissement: le système de refroidissement de l'appareil y est directement raccordé de sorte que de l'air froid circule dans les étagères de l'armoire pour directement refroidir les calculateurs alors que l'air chaud est aussi extrait par ces étagères.

La technologie utilisée pour les connexions est du type câblage électrique au moyen de connecteurs standardisés (connecteurs connus sous l'acronyme ARINC) qui sont lourds et encombrants.

Quelques liaisons utilisent de la fibre optique mais ces connexions sont en quantité réduite.

Chaque calculateur est relié aux équipements de l'aéronef au moyen d'un connecteur standard par exemple de type ARINC 600 c'est à dire un connecteur à 600 points de raccordement et le câblage est de type point à point.

La plupart du temps l'ensemble des points de contact du connecteur n'est pas utilisé et environ 30 à 40% de la capacité de raccordement du connecteur est utilisée ce qui conduit à une perte de place, un surpoids et un surcoût évidents.

En outre chaque changement de configuration de l'architecture du réseau de calculateurs conduit à une procédure de modification de câblage difficile et coûteuse en temps.

Par exemple pour une armoire ou rack de taille moyenne pour un avion moyen courrier civil, la masse totale des câbles, des supports de câbles et des connecteurs est d'environ 80kg tandis que la masse de la structure mécanique est proche de 70kg. Ainsi l'interconnexion représente plus de 50% de la masse globale du rack.

Les solutions actuelles d'interconnexion dans les aéronefs sont donc principalement des réseaux câblés en trois dimensions et l'ensemble du câblage se retrouve au niveau des calculateurs dans les armoires électriques.

Des essais de réalisations de dispositifs de communication sans fil entre plusieurs équipements et utilisant des guides d'ondes existent, le document US8078215 propose par exemple une solution de guide d'onde comportant plusieurs points de connexions et le document US2010/0318243 propose d'utiliser des pièces de structure avion, les lisses, comme guide d'onde.

Le document US2006/234787 divulgue une armoire électrique pourvue d'un système d'interconnexion pour des équipements tels que des calculateurs reçus dans ladite armoire. Le système d'interconnexion comporte au moins un guide d'ondes participant à l'ossature de l'armoire, ledit guide d'ondes étant pourvu d'ouvertures disposées en regard de logements de réception desdits équipements, lesdits ouvertures étant dimensionnées pour faire écran au passage d'ondes radiofréquence de communication sans fil à transmettre par ledit guide d'ondes et faire écran aux ondes extérieures.

### Brève description de l'invention

Au vu de cet art antérieur, le concept de la présente invention est basé sur un système de communication sans fil radiofréquence et sur une structure multifonctionnelle comprenant un guide d'ondes pour le système de communication.

Pour ce faire la présente invention propose une armoire électrique pourvue d'un système d'interconnexion pour des équipements tels que des calculateurs reçus dans ladite armoire selon la revendication 1.

Avantageusement, ledit au moins un guide d'ondes constitue en outre un conduit de ventilation pour des équipements de ladite armoire, au moins certaines desdites ouvertures comportant des ouvertures de passage d'air.

Selon un mode de réalisation particulier, l'armoire comporte des interfaces invariantes pour les équipements disposés dans l'armoire.

Avantageusement, ledit au moins un guide d'ondes est configuré pour servir également de liaison de mise à la masse et/ou d'élément de retour de courant fonctionnel pour les équipements qui y sont reliés.

Selon un mode de réalisation particulier, l'armoire comporte une structure mécanique support d'équipements dont au moins certains éléments sont métalliques et sont utilisés comme conducteurs de transport de l'alimentation électrique desdits équipements.

La connexion entre ces éléments conducteurs et les équipements se fait avantageusement par des contacts plats afin de s'affranchir de contraintes d'alignement entre les équipements et l'armoire.

Le système d'interconnexion de l'invention a avantageusement une architecture basée sur une topologie standardisée et des protocoles de communication de type réseau numérique.

Selon un mode de réalisation particulier, le système d'interconnexion comporte des émetteurs/récepteurs pourvus d'antennes s'insérant dans au moins partie desdites ouvertures des guides d'ondes en sorte de relier les équipements au réseau.

Les émetteurs/récepteurs sont avantageusement identiques pour tous les équipements de l'armoire de sorte que leur connexion avec le réseau soit un invariant.

Les liaisons câblées vers les équipements distants disposés dans l'aéronef sont avantageusement regroupées au niveau d'un équipement d'entrée/sortie d'armoire comportant une fonction de routeur pour la liaison sans fil.

L'armoire comportant des étagères, ces étagères ont préférablement une fonction de guide d'ondes.

Selon un mode de réalisation, les étagères sont divisées en au moins deux sections creuses, au moins une première section étant configurée pour fournir de l'air froid aux équipements portés par l'armoire et former un guide d'ondes véhiculant la communication sans fil, au moins une seconde section étant adaptée pour extraire de l'air chaud des équipements.

Avantageusement, au moins une desdites sections véhicule l'alimentation électrique de ces équipements.

Selon un mode de réalisation particulier, les étagères comportent trois sections, une section centrale configurée pour fournir de l'air froid aux équipements portés par l'armoire et véhiculer la communication sans fil, deux sections latérales adaptées pour extraire de l'air chaud des équipements. Plus particulièrement, la section centrale est avantageusement configurée pour constituer un retour de courant pour les équipements.

Avantageusement au moins l'une des sections latérales véhiculant une alimentation électrique des équipements.

La structure multifonctionnelle est conçue pour assurer une interconnexion sécurisée entre les équipements d'une armoire, apporter l'alimentation électrique, assurer la fixation et le maintien en position des équipements, apporter de l'air froid aux équipements et en extraire de l'air chaud.

La communication sans fil utilise par exemple un protocole de communication en réseau et est distribuée aux équipements de l'armoire.

Un multiplexage des données transmises est possible.

La solution de la présente invention simplifie l'installation des systèmes en supprimant la majeure partie des câbles ainsi que de leurs supports et blindages.

De même les connecteurs multibroches sont supprimés et remplacés au niveau des calculateurs dans l'armoire par des antennes ou des émetteurs récepteurs et au niveau de l'armoire par des ouvertures de passage dans les guides d'ondes.

### Brève description des dessins

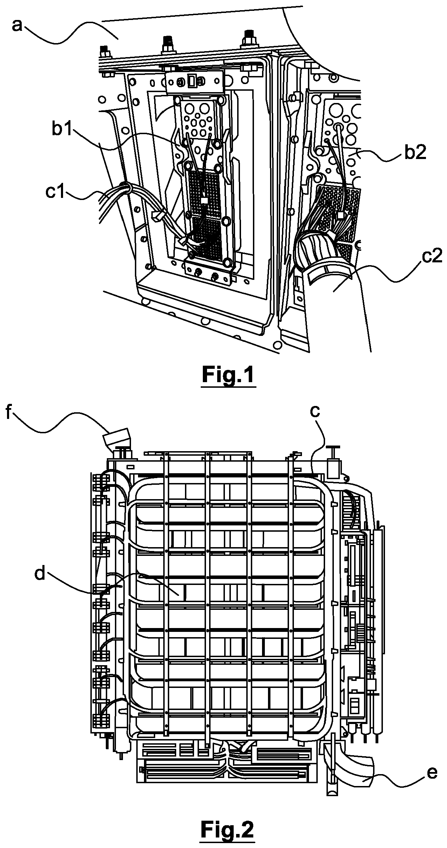

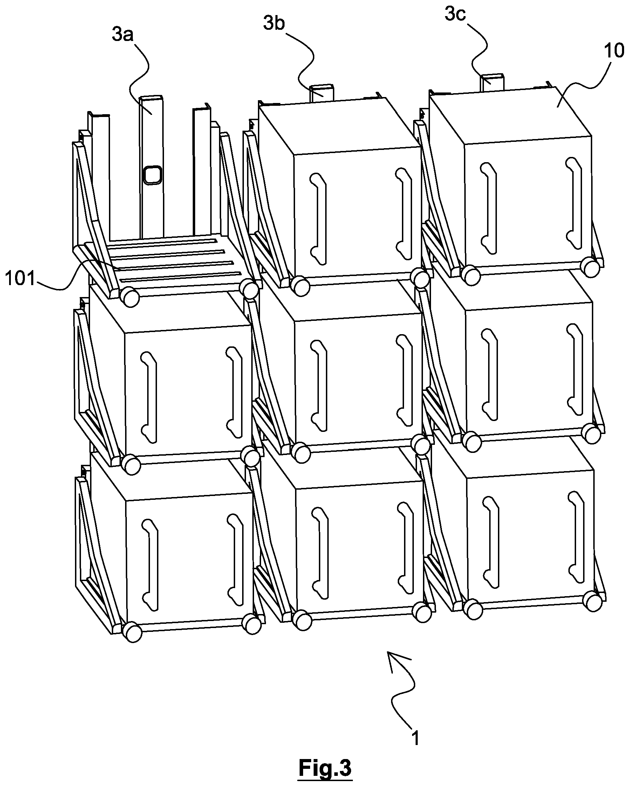

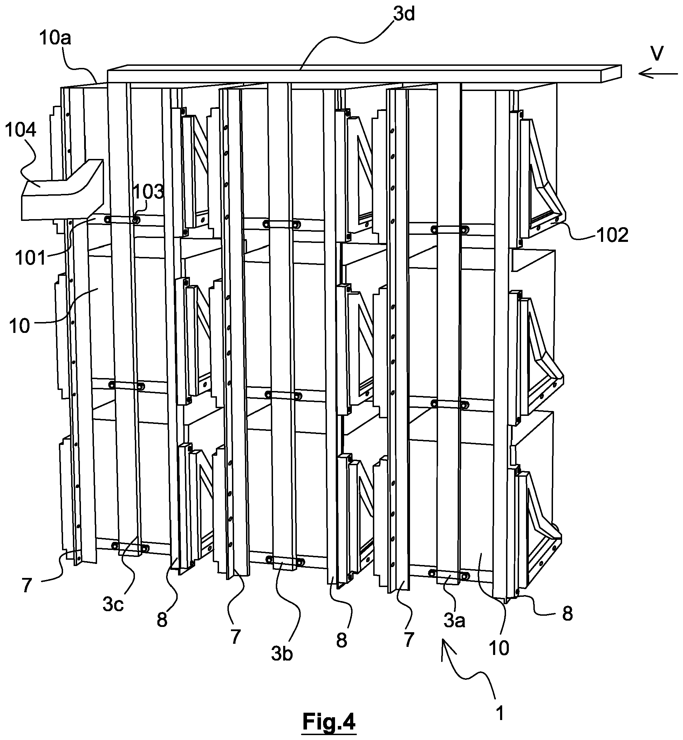

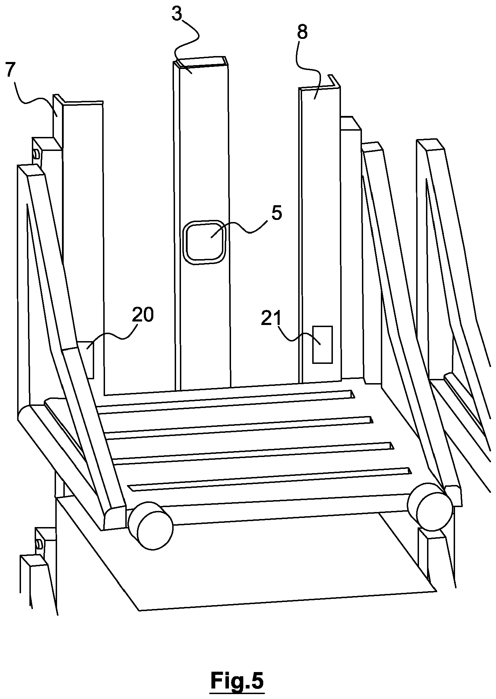

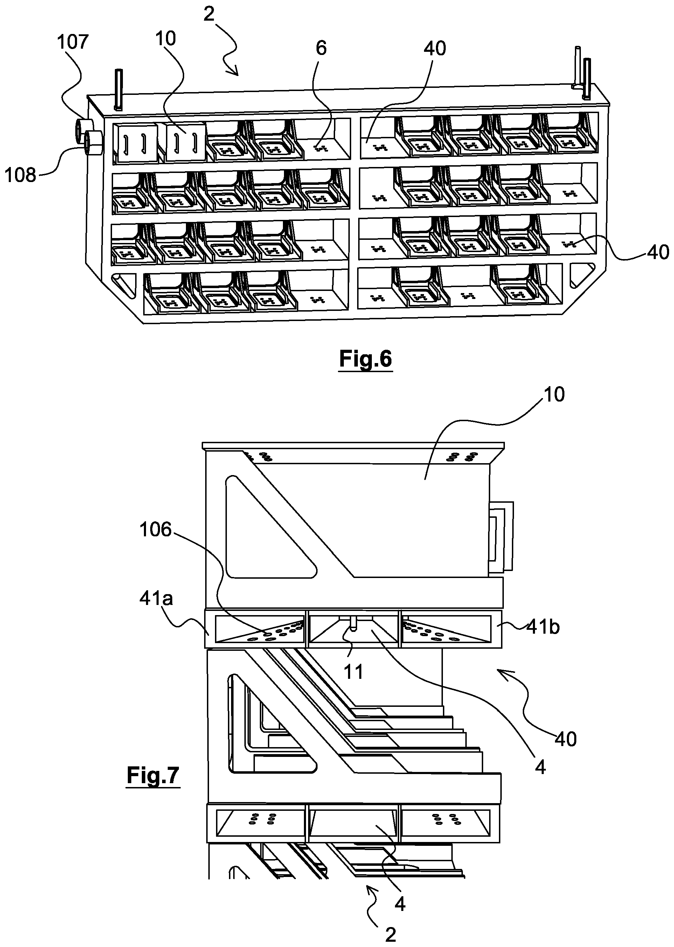

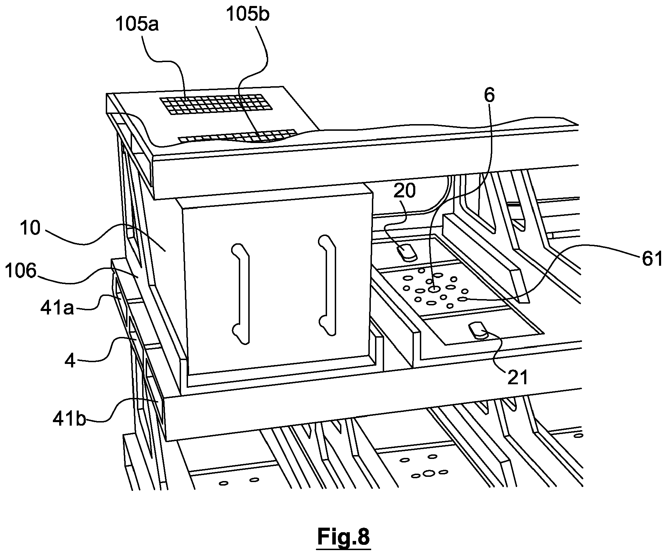

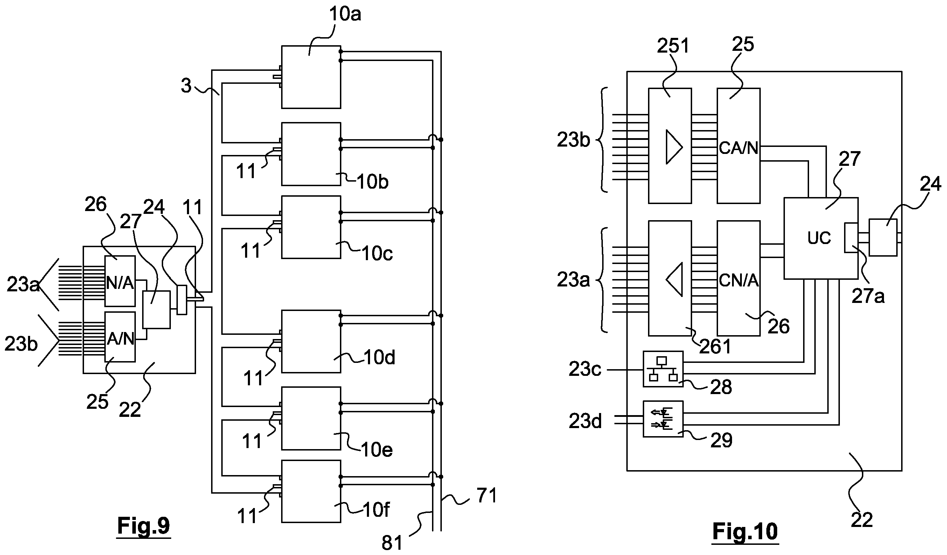

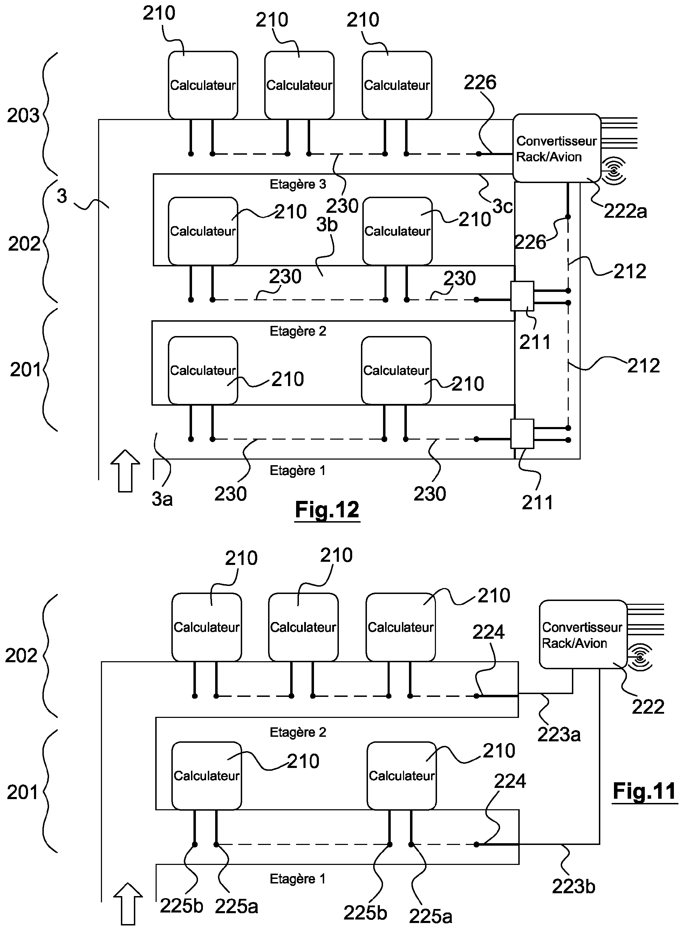

D'autres caractéristiques et avantages de l'invention seront apparents à la lecture de la description qui suit d'un exemple non limitatif de réalisation de l'invention en référence aux dessins qui représentent:
en figure 1: une vue de l'arrière d'une armoire d'équipements avioniques reliés par connecteurs électriques de l'art antérieur;
en figure 2: une vue schématique d'une armoire électrique de l'art antérieur;
en figure 3: une vue schématique de trois quart face d'un premier exemple de réalisation d'armoire selon l'invention;
en figure 4: une vue schématique de l'armoire de la figure 3 de trois quart arrière;
en figure 5: un détail de l'armoire de la figure 3 de trois quart face;
en figure 6: une vue schématique en perspective d'un second exemple de réalisation d'une armoire selon une variante de l'invention;
en figure 7: une vue en perspective d'une coupe transversale de l'armoire de la figure 6;
en figure 8: un détail de la vue de la figure 7;
en figure 9: un schéma de l'architecture à guides d'ondes de l'invention ;
en figure 10: une vue schématique d'un équipement d'entrée/sortie pour l'invention;
en figure 11: un premier exemple de réalisation de l'invention avec des liaisons optiques;
en figure 12: un second exemple de réalisation de l'invention avec des liaisons optiques.

### Description détaillée de modes de réalisation de l'invention

L'invention concerne en premier lieu un système d'interconnexion basé sur une structure d'armoire multifonctionnelle et une communication sans fil.

L'art antérieur en matière d'armoires avioniques est représenté aux figures 1 et 2.

La figure 1 montre un détail de l'arrière d'une armoire a où des connecteurs électrique b1, b2 permettent de relier des torons de câbles électriques c1, c2 aux calculateurs disposés dans l'armoire.

La figure 2 montre un exemple de câblage électrique d'une telle armoire et l'on voit aisément la complexité d'un tel câblage c en parallèle avec les dispositifs de refroidissement e, f des calculateurs d.

La structure multifonctionnelle 1, 3 de la présente invention qui s'applique à des armoires telles que représentées aux figures 3 et 6 a pour but de notablement simplifier de telles armoires et doit assurer, outre le transport de la communication entre les calculateurs dans l'armoire et le reste de l'aéronef, l'alimentation électrique et la ventilation des équipements de l'armoire électrique ou électronique.

La présente invention propose des interfaces invariantes entre les équipements disposés dans les armoires et ces dernières et une architecture basée sur une topologies standardisée et des protocoles de communication de type réseau.

Le principe de base est de simplifier l'interconnexion au sein de l'armoire en utilisant des communications sans fil se propageant dans des guides d'ondes comme représenté à la figure 10.

Selon cette figure, les liaisons câblées 23 vers les équipements distants disposés dans l'aéronef sont regroupées au niveau d'un équipement 22 d'entrée/sortie d'armoire.

Cet équipement d'entrée/sortie va incorporer les données reçues dans des trames informatiques émises vers l'ensemble des calculateurs dans l'armoire et aiguiller les données émises par les calculateurs dans l'armoire vers les équipements concernés dans l'aéronef. Il comporte pour ce faire une pluralité de convertisseurs analogique/numérique 25 et numérique/analogique 26 recevant et émettant des signaux de et vers des faisceaux 23a et 23b reliant le système à des actionneurs et capteurs de l'aéronef. L'équipement d'entrée/sortie comporte un processeur 27 adapté à transmettre les données numérisées entre les convertisseurs et les calculateurs 10a, ..., 10f de l'armoire selon un protocole réseau.

L'équipement d'entrée/sortie comporte en outre un module de communication 24 adapté à émettre et recevoir par l'intermédiaire d'une antenne 11 dans le guide d'ondes 3 reliant l'équipement d'entrée/sortie de l'armoire aux autres équipements 10a, ..., 10f logés dans ladite armoire. Le module de communication fonctionne notamment comme un routeur pour le protocole réseau émis dans le guide d'ondes.

L'interconnexion au sein de l'armoire utilise une communication sans fil radiofréquence véhiculée par les guides d'ondes 3 au niveau des étagères recevant les calculateurs.

Une communication sans fil implique l'usage d'émetteurs/récepteurs distants qui évitent l'usage de câbles et de connecteurs.

Les émetteurs/récepteurs sont avantageusement les mêmes pour tous les équipements de l'armoire de sorte que leur connexion avec le réseau soit un invariant. Ils comportent une antenne 11 insérée dans des ouvertures des guides d'ondes 3 venant au contact des l'équipements 10a, ..., 10f.

Pour l'alimentation électrique de ces équipements, des barres d'alimentation 71, 81 distribuent le courant dans l'armoire.

La communication réseau sans fil permet intrinsèquement une configuration et une reconfiguration simplifiées par logiciel de l'armoire du fait que la position des équipements de l'armoire n'est pas importante tant qu'elle reste dans la zone de communication. Les équipements ont juste besoin d'envoyer et de recevoir des signaux quelque soit leur position, l'identification des données et leur routage est réalisée par logiciel dans l'équipement d'entrée/sortie.

De nombreuses technologies sans fil et de protocoles existent et peuvent être utilisés et par exemple le protocole de communication Wi-Fi peut être utilisé du fait de sa facilité de conception. D'autres protocoles et longueurs d'ondes sont bien entendu possibles en fonction des performances recherchées.

L'usage de technologies sans fil pour les communications impose un niveau de sécurité important, une absence d'émission de perturbations vers l'extérieur et une grande robustesse contre les perturbations venant de l'extérieur.

Une utilisation du protocole de communication sans fil Wifi 802.11a avec des fréquences autour de 5GHz permet d'avoir 24 canaux qui ne se recouvrent pas, chacun permettant un débit théorique de 54 Mbit/s. Ainsi 24 hôtes peuvent échanger des données dans le guide d'onde sans aucune perturbation. Si plusieurs hôtes communiquent sur le même canal le débit est alors divisé par le nombre d'hôtes présents sur ledit canal. Dans le cas d'un rack avion moyen courrier de type standard, l'étagère la plus peuplée supporte 9 calculateurs LRU (calculateurs remplaçables en ligne). Dans le pire des cas, en utilisant un protocole WiFi 802.11a avec un seul guide d'ondes, un canal de communication unique permettra une bande passante disponible par équipement de 6 Mbit/s.

D'autres protocoles tels que par exemple le protocole UWB peuvent être utilisés pour accroître les performances du système.

Le système d'interconnexion de l'invention permet de faciliter la communication entre les équipements et l'équipement d'entrée/sortie car cette communication se fait à l'intérieur du guide d'ondes 3 qui permet d'isoler la communication des perturbations extérieures tout en évitant par la même occasion que cette communication ne perturbe d'autres équipements extérieurs.

Un premier exemple de réalisation est décrit aux figures 3, 4 et 5.

La figure 3 représente une armoire 1 équipée d'équipements 10 de type calculateurs sur des étagères 101. Selon cet exemple, et comme représenté plus particulièrement en figure 4, des guides d'ondes 3a, 3b et 3c verticaux relient les calculateurs les uns au dessus des autres.

Selon la figure 5 notamment, le guide d'onde comporte des ouvertures 5 en regard de l'arrière des équipements 10 pour recevoir des antennes des équipements.

Selon un mode de réalisation avantageux de l'invention qui utilise les guides d'ondes creux comme conduits de ventilation, les ouvertures 5 servent de bouches de ventilation afin d'apporter de l'air frais aux équipements.

Des barres verticales 7 et 8 permettent de délivrer l'alimentation électrique des calculateurs au travers de zones de contact électrique 20 et 21.

La connexion entre ces éléments conducteurs et les équipements se fait par exemple par des contacts plats au niveau des barres et de contacts à piston de type connu au niveau de l'arrière des calculateurs afin de minimiser les contraintes/tolérances de réalisation et d'assemblage de la structure (pas d'alignement nécessaire) permettant ainsi la suppression d'éléments mécaniques lourds et coûteux.

Par exemple, les contacts électriques entre l'armoire et les calculateurs peuvent par exemple être des contacts plats à lamelles comme commercialisés par la société Multi-Contact.

La fixation des équipements dans l'armoire est réalisée par des moyens traditionnels non représentés.

Les barres 7 et 8 ainsi que les guides d'ondes 3a, 3b, 3c en matériaux métalliques sont ici en outre des éléments de structure de l'armoire qui comme représenté en figure 4 supportent les étagères au travers ici de pattes de fixation 103 soudées ou fixée de manière quelconque sur les guides d'ondes et vissées à l'arrière des étagères 101, au travers d'équerres 102 fixées sur les barres d'alimentation 7, 8 et sur lesquelles sont fixées les bords latéraux des étagères.

Comme vu plus haut, les guides d'ondes 3 creux sont aussi utilisés comme gaine de ventilation pour les différents équipements. Ici un guide d'onde horizontal 3d relie les guides d'ondes 3a, 3b, 3c et comporte une entrée d'air soufflé V.

L'équipement d'entrée/sortie est par exemple l'équipement 10a en haut à gauche sur la figure 4 qui comporte alors un toron de câbles schématisé sous la référence 104.

Dans cet exemple, la sortie d'air des équipement se fait vers l'extérieur.

Les guides d'ondes sont aussi éventuellement configurés pour servir d'élément de retour de courant fonctionnel pour les équipements qui y sont connectés.

Le fait d'utiliser une communication sans fil entre les équipements électroniques permet de gagner en temps d'installation mais aussi de réduire notablement la masse du fait que de nombreux câbles et connecteurs ne sont plus présents. Les guides d'ondes jouent le rôle d'un câblage tout en offrant une meilleure protection aux interférences et une plus grande modularité.

Pour ajouter ou retirer un calculateur du réseau de communication, la seule chose à faire, en dehors de la fixation ou du démontage mécanique, est de positionner ou retirer son antenne du guide d'ondes et appliquer les contacts d'alimentation sur les barres d'alimentation.

En outre du fait de la très faible atténuation du signal dans les guides d'ondes au niveau de l'armoire, une très faible puissance est nécessaire pour le réseau.

Dans un mode de réalisation alternatif, le meuble pour équipements électriques de l'invention est selon la figure 6 une armoire 3 pour laquelle les guides d'ondes sont intégrés à des étagères 40 portant des rangées d'équipements 10.

Cette conception est particulièrement adaptée pour réaliser des armoires compactes et pour optimiser la ventilation des équipements 10.

Les étagères de l'armoire s'étendent longitudinalement sur toute la largeur de l'armoire sous les équipements. Elles sont divisées transversalement en sections adaptées à des fonctions différentes, une de ces sections au moins étant utilisée comme guide d'ondes.

Selon les figures 6 à 8 trois sections sont réalisées. La section centrale 4 est dédiée à l'entrée d'air froid, la communication sans fil et un retour de courant.

Les sections 41a, 41b entourant la section centrale sont utilisées pour extraire l'air chaud des calculateurs et apporter l'alimentation électrique à ces calculateurs.

Ces conduits 4, 41a, 41b sont conducteurs de l'électricité et sont par exemple isolés entre eux par des tiges ou lamelles plastiques non représentées.

Ils peuvent aussi être enrobés par un matériau isolant thermique et électrique comportant des ouvertures au niveau des zones de raccordement des calculateurs.

Selon la figure 8, la section centrale comporte des ouvertures 6 débouchant sous les équipements 10 pour recevoir les antennes 11, représentées en figure 7, et des ouvertures 61 pour laisser passer l'air de refroidissement des équipements qui sont refroidis par dessous dans ce cas.

Les trous ou ouvertures 6, 61 sont réalisés de dimension inférieure au quart de la longueur d'onde λ/4 des ondes électromagnétiques qui ne peuvent de ce fait passer au travers de ces ouvertures.

Pour le Wi-Fi à 2.4 GHz, la longueur d'onde est 12.5 cm. Le diamètre des trous est choisi pour être inférieur à 3cm de façon à ce que les trous agissant en filtre passe bas et ne laissent pas passer les ondes.

Selon la figure 8 notamment, les équipements 10 sont disposés dans des berceaux 106 comportant un fond ouvert pour permettre le passage de l'antenne et de l'air au niveau de la section centrale réalisée par le guide d'ondes 4 et pour permettre de connecter l'alimentation de l'équipement au moyen de contacts électriques 20, 21 disposés sur les sections 41a et 41b de part et d'autre de la section centrale.

Selon la figure 7, les sections 41a, 41b sont pourvues sur leur face inférieure de trous 106 d'extraction d'air des équipements qui sont pour leur part pourvus d'ouvertures d'aération 105a, 105b en face supérieure comme représenté en figure 8.

Bien entendu, les sections de tubes rectangulaires formant les étagères sont assemblées ensemble au travers de moyens isolants électriques, par exemple les berceaux 106 qui peuvent être réalisés en matériaux composites non conducteurs.

De retour à la figure 6, les extrémités latérales des armoires comportent des conduits de raccordement 107, 108 pour la ventilation et sont pourvues de moyens de raccordement des guides d'ondes entre les divers niveaux d'étagères.

Une architecture de rack optimisée par exemple en disposant des équipement d'entrée/sortie par étage peut accroître de manière significative la bande passante individuelle en réduisant le nombre de calculateurs communiquant sur le même canal. L'utilisation d'un autre protocole tel que le protocole UWB par exemple peut aussi accroître la bande passante théorique pour le système complet.

L'invention apporte ainsi une souplesse de réalisation des armoires ou racks électroniques notamment dans les aéronefs en réduisant le nombre de points de connexion électriques et de câbles ce qui est favorable pour la fiabilité des systèmes et leur masse. L'invention permet en outre de standardiser et de simplifier l'interface des équipements d'avionique ce qui en réduit le coût.

L'invention selon la figure 9 est basée sur un équipement d'entrée/sortie 22, pour armoire électrique ou électronique regroupant une pluralité d'équipements tels que des calculateurs.

Selon la figure 10 l'équipement d'entrée/sortie comporte une pluralité de voies d'entrées/sorties analogiques 23a, 23b et des unités de conversion constituées par des convertisseurs analogique/numérique 25 et numérique/analogique 26, une voies d'entrée/sortie de type port réseau 23c et une voie d'entrée/sortie optique 23d.

Les voies d'entrées analogiques comportent un étage de mise en forme et/ou de protection 251 en amont des convertisseurs analogique/numérique 25 et les voies de sortie analogiques des étages de puissance 261 en sortie des convertisseurs numérique/analogique 26.

Les unités de conversion sont reliées à une unité de calcul 27 de type micro-ordinateur comportant un microprocesseur, de la mémoire de masse, de la mémoire vive et un programme interne.

L'équipement comporte en outre une unité de gestion de protocole de liaison réseau numérique 27a reliée à l'unité de calcul et à un module émetteur/récepteur 24.

L'équipement d'entrée/sortie comporte un logiciel adapté à réaliser la transmission sous forme numérique de données représentatives de valeurs d'entrée/sortie depuis et vers des calculateurs en réseau au travers du module émetteur/récepteur.

Le logiciel peut être d'un type adapté à une transmission passive qui ne fait que transmettre les données d'entrées avec le numéro de l'entrée sur le réseau de l'armoire et affecter les données de sorties aux sorties comme déterminé par les calculateurs ou être un logiciel adapté à transmettre des trames dédiées pour les calculateurs de l'armoire et à retranscrire des données de sortie sur réception de trames normalisées des calculateurs de l'armoire.

Le logiciel comporte notamment un module de gestion d'un réseau informatique au travers du module émetteur/récepteur et fonctionner en routeur pour le réseau.

L'équipement d'entrée/sortie peut aussi avoir une fonction de serveur de données pour les équipements ou calculateurs de l'armoire. Il peut constituer un convertisseur de protocole entre le réseau interne à l'armoire et un ou plusieurs réseaux d'un aéronef.

Le système d'interconnexion de l'armoire peut comporter un réseau radiofréquence confiné dans des guides d'ondes associés à l'armoire et reliant les modules émetteurs/récepteurs des calculateurs et de l'équipement d'entrée/sortie. Le système d'interconnexion peut de manière alternative comporter un réseau de guides d'ondes optiques associés à l'armoire et reliant les modules optiques des calculateurs et de l'équipement d'entrée/sortie.

Les exemples des figures 11 et 12 sont des variantes de réalisation pour lesquelles la communication entre un équipement d'entrée/sortie 222, 222a, ou convertisseur rack avion, et les calculateurs 210 est au moins en partie optique.

Dans l'exemple de la figure 11, l'équipement d'entrée/sortie 222 comporte deux liaisons 223a, 223b se terminant par des émetteurs récepteurs optiques 224 pour chacun émettre et recevoir un faisceau optique sur un étage 201, 202 d'une armoire de l'invention. L'équipement d'entrée/sortie comporte dans ce cas deux émetteurs/récepteurs 225.

Chaque calculateur 210 comporte lui même une paire d'émetteurs/récepteurs optiques 225a, 225b qui assurent la continuité de la liaison optique bidirectionnelle 230 au niveau de chaque étage de l'armoire entre les calculateurs.

Dans le cas de la figure 12, l'équipement d'entrée/sortie convertisseur rack/avion distribue une étagères 203 de l'armoire par le biais d'une sortie directe 226 et deux étagères 201, 202 par le biais de répéteurs 211 reliés à l'équipement d'entrée/sortie par une liaison optique bidirectionnelle 212. L'équipement d'entrée/sortie comporte dans ce cas trois émetteurs/récepteurs 226.

Un tel système utilise les conduits de ventilation 3, 3a, 3b, 3c pour confiner les signaux optiques. Une filtration est dans ce cas nécessaire pour éviter de polluer les émetteurs/récepteurs optiques.

Comme dans la version à émission/réception radiofréquence les calculateurs ou équipements 210 peuvent être normalisés et intégrés simplement dans l'armoire.

Les faisceaux pour l'émission/réception peut se faire en lumière visible, infrarouge ou ultraviolette. Les émetteurs/récepteurs optiques des calculateurs sont tout comme les antennes du système radiofréquence insérées dans les tubes de ventilation 3, 3a, 3b, 3c par des trous dimensionnés pour s'opposer au passage d'ondes électromagnétiques ambiantes.

L'invention n'est pas limitée aux exemples représentés et il est par exemple possible de combiner un réseau radiofréquence et un réseau optique dans le cadre de l'invention.

## Revendications

1. Armoire électrique (1, 2) pourvue d'un système d'interconnexion pour des équipements (10) tels que des calculateurs reçus dans ladite armoire pour laquelle le système d'interconnexion comporte au moins un guide d'ondes (3, 4) participant à l'ossature de l'armoire, ledit guide d'ondes étant pourvu d'ouvertures (5, 6) disposées en regard de logements de réceptions desdits équipements, lesdites ouvertures étant dimensionnées pour faire écran au passage d'ondes radiofréquence de communication sans fil à transmettre par ledit guide d'ondes et faire écran aux ondes extérieures, **caractérisée en ce qu'**au moins un guide d'onde (3, 4) est configuré pour servir également de liaison de mise à la masse et/ou d'élément de retour de courant fonctionnel pour les équipements (10) qui y sont reliés.

2. Armoire électrique selon la revendication 1 pour laquelle ledit au moins un guide d'ondes (3, 4) constitue en outre un conduit de ventilation pour des équipements de ladite armoire, au moins certaines desdites ouvertures comportant des ouvertures (5, 61) de passage d'air.

3. Armoire électrique selon la revendication 1 ou 2, **caractérisée en ce qu'**elle comporte des interfaces invariantes pour les équipements disposés dans l'armoire.

4. Armoire électrique selon l'une quelconque des revendications précédentes comportant une structure mécanique support d'équipements dont au moins certains éléments (7, 8) sont métalliques et sont utilisés comme conducteurs de transport de l'alimentation électrique desdits équipements.

5. Armoire électrique selon la revendication 4 pour laquelle la connexion entre ces éléments conducteurs et les équipements se fait par des contacts plats (20, 21).

6. Armoire électrique selon l'une quelconque des revendications précédentes pour laquelle le système d'interconnexion a une architecture basée sur une topologie standardisée et des protocoles de communication de type réseau numérique.

7. Armoire électrique selon la revendication 6 pour laquelle le système d'interconnexion comporte des émetteurs/récepteurs pourvus d'antennes (11) s'insérant dans au moins partie desdites ouvertures (5, 6) des guides d'ondes en sorte de relier les équipements au réseau.

8. Armoire électrique selon la revendication 7 pour laquelle les émetteurs/récepteurs sont identiques pour tous les équipements de l'armoire de sorte que leur connexion avec le réseau soit un invariant.

9. Armoire électrique selon l'une quelconque des revendications précédentes pour laquelle les liaisons câblées (23) vers les équipements distants disposés dans l'aéronef sont regroupées au niveau d'un équipement (22) d'entrée/sortie d'armoire comportant une fonction de routeur (24) pour la liaison sans fil.

10. Armoire électrique selon la revendication 9 comportant des étagères (40) divisées en trois sections, une section centrale (4) configurée pour fournir de l'air froid aux équipements portés par l'armoire et véhiculer la communication sans fil, deux sections latérales (41a, 41b) adaptées pour extraire de l'air chaud des équipements.

11. Armoire électrique selon la revendication 10 pour laquelle au moins l'une des sections latérales véhicule une alimentation électrique des équipements.

12. Armoire électrique selon la revendication 10 pour laquelle la section centrale (4) est configurée pour constituer un retour de courant pour les équipements.

## Patentansprüche

1. Elektroschrank (1, 2), welcher mit einem Verbindungssystem für Einrichtungen (10) wie etwa Rechner versehen ist, die in dem Schrank aufgenommen sind, wobei das Verbindungssystem wenigstens einen Wellenleiter (3, 4) aufweist, welcher Teil des Gerüsts des Schrankes ist, wobei der Wellenleiter mit Öffnungen (5, 6) versehen ist, die gegenüber von Aufnahmeräumen für die Einrichtungen angeordnet sind, wobei die Öffnungen so bemessen sind, dass sie den Durchgang von Funkfrequenzwellen zur drahtlosen Kommunikation abschirmen, die von dem Wellenleiter zu übertragen sind, und die äußeren Wellen abschirmen,
**dadurch gekennzeichnet, dass** wenigstens ein Wellenleiter (3, 4) dafür ausgelegt ist, auch als Masseanschlussverbindung und/oder als funktionales Rückstromelement für die Einrichtungen (10), die damit verbunden sind, zu dienen.

2. Elektroschrank nach Anspruch 1, wobei der wenigstens eine Wellenleiter (3, 4) außerdem einen Lüftungskanal für Einrichtungen des Schrankes bildet, wobei wenigstens einige der Öffnungen Luftdurchgangsöffnungen (5, 61) umfassen.

3. Elektroschrank nach Anspruch 1 oder 2, **dadurch gekennzeichnet, dass** er invariante Schnittstellen für die im Schrank angeordneten Einrichtungen aufweist.

4. Elektroschrank nach einem der vorhergehenden Ansprüche, welcher eine mechanische Struktur zur Abstützung von Einrichtungen aufweist, von der wenigstens einige Elemente (7, 8) metallisch sind und als Leiter für die Realisierung der Stromversorgung der Einrichtungen verwendet werden.

5. Elektroschrank nach Anspruch 4, wobei die Verbindung zwischen diesen leitenden Elementen und den Einrichtungen über Flachkontakte (20, 21) erfolgt.

6. Elektroschrank nach einem der vorhergehenden Ansprüche, wobei das Verbindungssystem eine Architektur aufweist, die auf einer standardisierten Topologie und Kommunikationsprotokollen vom Typ digitaler Netze basiert.

7. Elektroschrank nach Anspruch 6, wobei das Verbindungssystem mit Antennen (11) versehene Sendeempfänger umfasst, die in wenigstens einen Teil der Öffnungen (5, 6) der Wellenleiter eingesetzt werden, um die Einrichtungen mit dem Netz zu verbinden.

8. Elektroschrank nach Anspruch 7, wobei die Sendeempfänger für alle Einrichtungen des Schrankes identisch sind, so dass ihre Verbindung mit dem Netz eine Invariante ist.

9. Elektroschrank nach einem der vorhergehenden Ansprüche, wobei die Kabelverbindungen (23) zu den im Luftfahrzeug angeordneten entfernten Einrichtungen an einer Eingangs- /Ausgangseinrichtung (22) des Schrankes zusammengefasst sind, die eine Router-Funktion (24) für die drahtlose Verbindung aufweist.

10. Elektroschrank nach Anspruch 9, welcher Etagengestelle (40) umfasst, die in drei Sektionen aufgeteilt sind, eine mittlere Sektion (4), die dafür ausgelegt ist, den von dem Schrank getragenen Einrichtungen kalte Luft zuzuführen und die drahtlose Kommunikation zu ermöglichen, und zwei seitliche Sektionen (41a, 41b), die dafür ausgelegt sind, warme Luft von den Einrichtungen abzuführen.

11. Elektroschrank nach Anspruch 10, wobei wenigstens eine der seitlichen Sektionen einer Stromversorgung der Einrichtungen dient.

12. Elektroschrank nach Anspruch 10, wobei die mittlere Sektion (4) dafür ausgelegt ist, Rückstromelement für die Einrichtungen zu bilden.

## Claims

1. Electrical enclosure (1, 2) provided with an interconnection system for equipment items (10) such as computers accommodated in said enclosure, for which the interconnection system comprises at least one waveguide (3, 4) forming part of the framework of the enclosure, said waveguide being provided with holes (5, 6) arranged facing housings for accommodating said equipment items, said holes being dimensioned to form a screen to the passage of wireless communication radiofrequency waves to be transmitted by said waveguide and form a screen to external waves, **characterized in that** at least one waveguide (3, 4) is configured to serve also as grounding link and/or as functional current return element for the equipment items (10) which are linked thereto.

2. Electrical enclosure according to Claim 1, for which said at least one waveguide (3, 4) further constitutes a ventilation duct for equipment items of said enclosure, at least some of said holes comprising holes (5, 61) for the passage of air.

3. Electrical enclosure according to Claim 1 or 2, **characterized in that** it comprises invariant interfaces for the equipment items arranged in the enclosure.

4. Electrical enclosure according to any one of the preceding claims, comprising a mechanical structure supporting equipment items of which at least some elements (7, 8) are metallic and are used as conductors for transporting electrical power supply for said equipment items.

5. Electrical enclosure according to Claim 4, for which the connection between these conductor elements and the equipment items is made by flat contacts (20, 21).

6. Electrical enclosure according to any one of the preceding claims, for which the interconnection system has an architecture based on a standardized topology and on communication protocols of digital network type.

7. Electrical enclosure according to Claim 6, for which the interconnection system comprises transceivers provided with antennas (11) that are inserted into at least some of said holes (5, 6) of the waveguides so as to link the equipment items to the network.

8. Electrical enclosure according to Claim 7, for which the transceivers are identical for all the equipment items of the enclosure such that their connection to the network is an invariant.

9. Electrical enclosure according to any one of the preceding claims, for which the wired links (23) to the remote equipment items arranged in the aircraft are grouped together at an enclosure input/output equipment item (22) comprising a router function (24) for the wireless link.

10. Electrical enclosure according to Claim 9 comprising shelves (40) divided into three sections, a central section (4) configured to supply cold air to the equipment items borne by the enclosure and convey the wireless communication, two lateral sections (41a, 41b) adapted to extract hot air from the equipment items.

11. Electrical enclosure according to Claim 10, for which at least one of the lateral sections conveys an electrical power supply for the equipment items.

12. Electrical enclosure according to Claim 10, for which the central section (4) is configured to constitute a current return for the equipment items.
